# FASCICULE DE BREVET EUROPEEN

(11) **EP 0 834 245 B1**
(45) Date de publication et mention de la délivrance du brevet: **12.06.2002**
(21) Numéro de dépôt: 97402319.4
(22) Date de dépôt: 02.10.1997
(51) Int. Cl.: A01C 3/06

(54) **Vis d'épandage de fumier et épandeur de fumier à vis en comportant l'application**
Streuwalze für Stalldung und Stalldungstreuer mit Streuwalze
Distributor rotor for manure and manure spreader with distributor rotor

(30) Priorité: 03.10.1996 FR 9612075
(43) Date de publication de la demande: 08.04.1998
(73) Titulaire: JEANTIL S.A., F-35590 l'Hermitage (FR)
(72) Inventeur: Jeantil, Philippe, 35132 Vezin le Coquet (FR)
(74) Mandataire: Moncheny, Michel

(56) Documents cités:
- DE-B- 1 126 660
- FR-A- 2 080 646
- US-A- 2 240 720

## Description

La présente invention concerne les machines d'épandage ou épandeurs de fumier ou analogue et se rapporte plus particulièrement aux machines d'épandage à vis horizontales.

Les épandeurs de fumier comportent généralement un châssis muni d'un ou plusieurs trains de roues et surmonté d'une caisse munie d'un fond mouvant à une extrémité de laquelle se trouve un dispositif d'épandage comprenant une ou plusieurs vis.

Le document DE-B-1 126 660 décrit une vis d'épandage selon le préambule de la revendication.

On peut distinguer les épandeurs à plateaux tournants horizontaux ou à vis verticales, qui assurent une bonne largeur d'épandage mais qui sont d'un prix de revient élevé. Les épandeurs à vis horizontales, dont le prix est beaucoup plus réduit en raison de la simplicité des moyens de transmission de mouvement aux vis, ont une largeur d'épandage faible. Leur emploi nécessite donc un grand nombre de passages pour amender une surface donnée, ce qui entraîne des coûts et un temps de travail plus élevés. En outre, les passages répétés de l'épandeur et de son tracteur provoquent un tassement du terrain préjudiciable, entré autres, aux futurs labours.

L'invention a pour but de remédier aux inconvénients mentionnés précédemment en créant un épandeur à vis horizontales permettant d'assurer un épandage de largeur accrue par rapport aux machines classiques de ce type.

A cet effet, l'invention a pour objet une vis d'épandage selon la revendication 1.

Suivant des modes particuliers de réalisation, la vis comporte une ou plusieurs des caractéristiques précisées par les revendications 2 à 7.

L'invention a également pour objet un épandeur de fumier selon la revendication 8.

Suivant des modes particuliers de réalisation, l'épandeur comporte l'une ou plusieurs des caractéristiques précisées par les revendications 9 à 10.

L'invention sera mieux comprise à la lecture de la description qui va suivre, donnée uniquement à titre d'exemple, et faite en se référant aux dessins annexés sur lesquels :
- la figure 1 est une vue en perspective d'un épandeur de fumier suivant l'invention,
- la figure 2 est une vue partielle de côté de l'épandeur de la figure 1,
- la figure 3 est une vue en perspective à plus grande échelle d'un doigt de projection pour épandeur suivant l'invention,
- la figure 4 est une vue de dessus du doigt de projection de la figure 3,
- la figure 5 est une vue schématique de dessus d'un épandeur montrant un autre mode de réalisation de la vis,
- la figure 6 est une vue partielle de dessus à plus grande échelle d'une partie d'une demi-vis de l'épandeur de la figure 5,
- la figure 7 est une vue de dessus à plus grande échelle d'une autre partie de la même demi-vis de l'épandeur, et
- la figure 8 est une vue partielle de côté d'un épandeur suivant un autre mode de réalisation de l'invention.

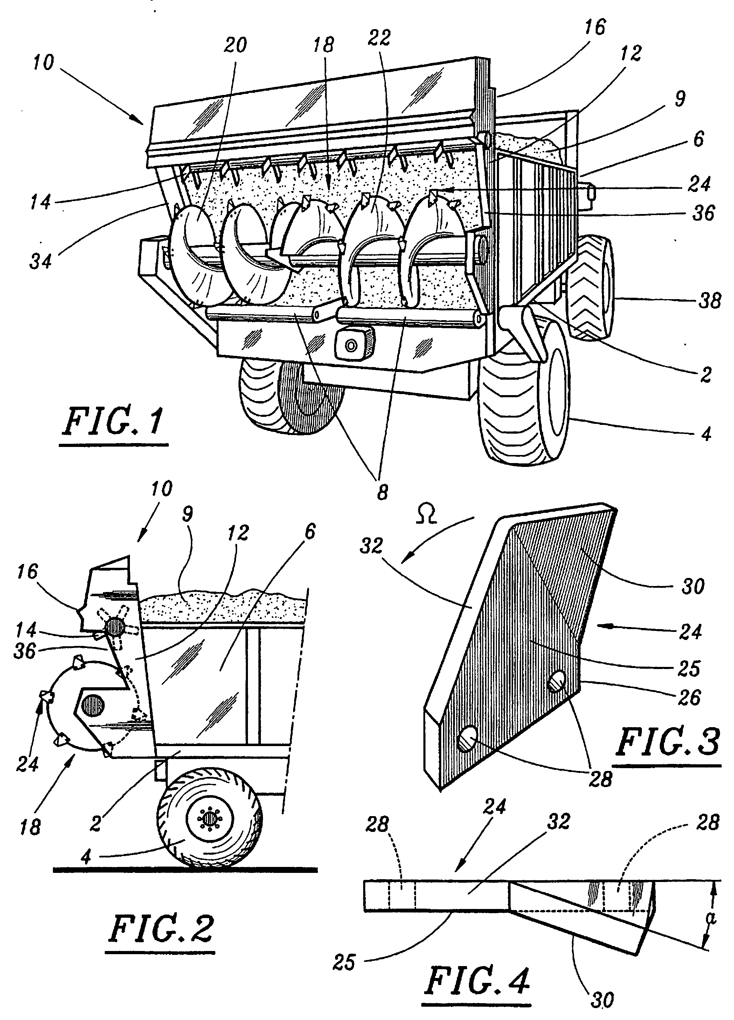

La figure 1 montre un épandeur de fumier comportant un châssis 2 muni d'un train de roues 4 surmonté d'une caisse 6 munie d'un fond mouvant 8 constitué par exemple de deux tapis roulants et remplie de fumier 9. Un dispositif d'épandage 10 situé à l'arrière de la caisse 6 comprend, un cadre 12 sur lequel est montée une vis d'amenée du fumier 14 surmontée d'un capotage d'orientation du produit 16, et une vis d'épandage d'axe horizontal 18. Cette vis 18, montée à rotation sur les deux côtés du cadre 12 du dispositif 10, est composée de deux demi-vis coaxiales 20, 22 à pas inversés sur lesquelles sont répartis des doigts 24 de projection du fumier. Comme représenté en détail aux figures 3 et 4, chacun des doigts 24 de projection présente une surface 25 en saillie par rapport au bord de la demi-vis correspondante. Il est réalisé en forme générale de plaque plane et il comporte un bord 26 de fixation à la demi-vis 20 ou 22 correspondante. Le bord 26 est muni de trous 28 de fixation au moyen de boulons et d'écrous non représentés. La partie en saillie 25 de chaque doigt 24 de projection comporte un bord 30 de forme triangulaire plié vers l'extrémité extérieure de la demi-vis 20 ou 22 qui porte le doigt. Comme le montre la figure 4, le bord plié 30 du doigt de projection 24 fait un angle α avec le plan de plaque du doigt 24 de projection.

Ainsi qu'on le voit à la figure 1 tous les doigts 24 de projection de la vis de la machine d'épandage sont pliés. Les parois du cadre 12 dans lequel est montée la vis d'épandage sont munies d'échancrures 34, 36 d'éjection du fumier.

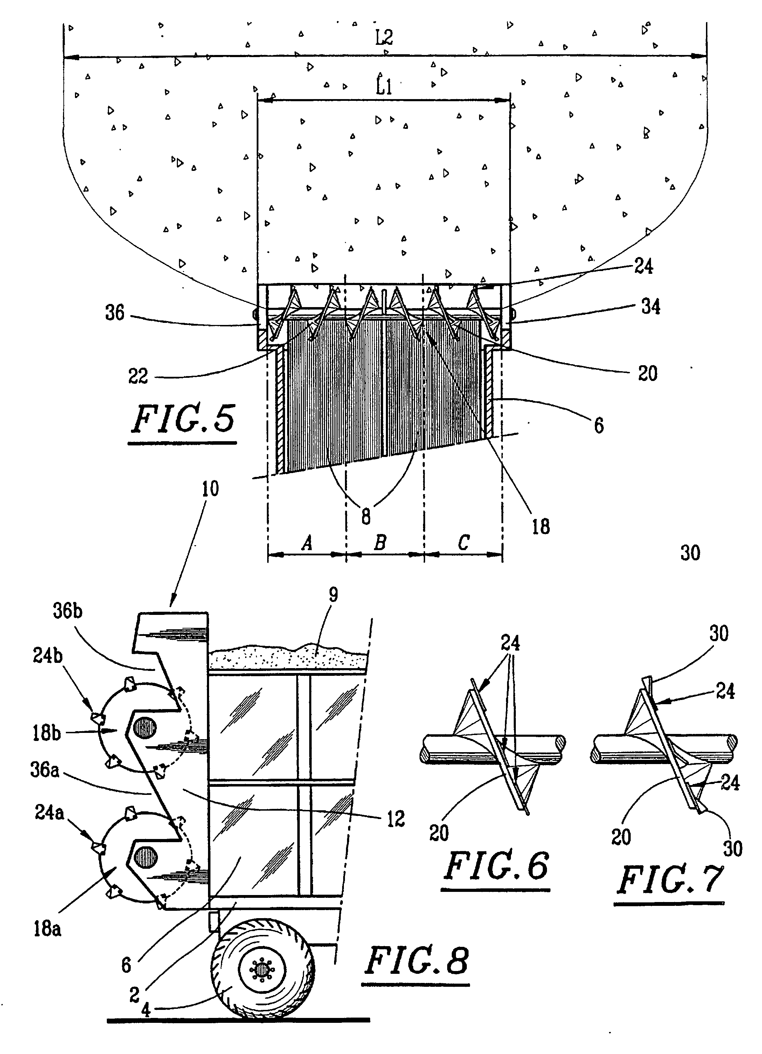

La figure 5 montre un autre mode de réalisation de la machine suivant l'invention.

Selon ce mode de réalisation la machine comporte une vis d'épandage 18 à deux demi-vis 20, 22 à pas inversés. Cette vis comporte deux parties d'extrémité A et C et une partie centrale B.

Dans la partie centrale B les doigts de projection sont plats et dans les parties d'extrémité A et C les doigts de projection sont pliés.

La figure 6 montre une vue partielle et agrandie de la partie B de la vis 18 appartenant à la demi-vis 20, et dans laquelle les doigts de projection 24 sont plats.

La figure 7 montre une vue partielle et agrandie de la partie de la demi-vis 20 dans laquelle les doigts de projection 24 ont un bord plié 30. La géométrie des doigts 24 de projection de la demi-vis 22 de gauche est semblable à celle de la vis de droite, l'orientation des doigts étant adaptée au pas de la vis.

En revenant à nouveau à la figure 3 on voit que chaque doigt 24 comporte un bord d'attaque 32 incliné dans le sens opposé au sens de rotation de la vis 18 indiqué par une flèche incurvée Ω sur cette figure.

La figure 8 montre un autre mode de réalisation de l'invention dans lequel deux vis sont montées l'une au dessus de l'autre, les éléments de chacune de ces vis étant repérés respectivement par les indices a et b.

Ainsi dans ce mode de réalisation, le dispositif d'épandage comprend deux vis 18a et 18b d'épandage, comprenant deux demi-vis d'éjection coaxiales 20a, 22a, 20b et 22b munies de doigts 24a, 24b. Deux paires d'échancrures 34a, 36a, 34b et 36b d'éjection latérale du fumier sont prévues dans le cadre 12 du dispositif d'épandage 10 au niveau des extrémités de chaque vis. Les autres éléments constituant l'épandeur sont analogues à ceux de la figure 1.

L'épandeur est attelé à un tracteur, dont on peut voir le train de roues arrière 38 sur la figure 1, et possède une prise de force (non représenté) qui permet, notamment, la mise en rotation de la vis 14 d'alimentation et de la ou des vis 18 d'épandage, ainsi que la mise en mouvement du fond mouvant 8.

Si l'on considère le fonctionnement de l'épandeur des figures 1 et 2, lors de l'épandage, le tracteur tracte l'épandeur repli de fumier selon des trajets successifs et réguliers sur la surface à amender. Les tapis roulants du fond mouvant 8 et les vis 14 et 18 sont mis en mouvement et l'épandage commence. Les tapis amènent le fumier 9 contenu dans la caisse 6 vers le dispositif d'épandage 10. D'une part la vis 14 d'amenée divise et dirige le fumier 9 vers la vis d'épandage 18. Le capotage oriente le fumier 9 de sorte qu'il tombe bien sur la vis d'épandage 18. La vis 18 prélève directement le fumier amené à sa hauteur par les tapis du fond mouvant 8. La vis d'épandage 18 divise et projette alors le fumier. La pénétration des doigts 24 dans le fumier 9, et surtout sa projection ultérieure sont facilitées par l'inclinaison des bords d'attaque 36 des doigts de projection 24. Les particules de fumier 9 ainsi arrachées, accompagnent les doigts de projection 24 dans leur mouvement de rotation puis sont éjectées par ceux-ci. Les bords pliés 30 des doigts 24 de projection, communiquent une accélération latérale aux particules de fumier qui sont projetées selon une trajectoire latérale à travers les échancrures d'éjection 34, 36 prévues à cet effet dans les parois latérales du cadre 12.

On obtient ainsi une zone d'épandage qui s'étend bien au delà des côtés du dispositif 10 d'épandage.

Dans le mode de réalisation de la figure 8 ne comportant pas de vis d'alimentation, les deux vis d'épandage 18 coopèrent directement avec le fumier et la projection du fumier est analogue à celle exposée ci-dessus. On notera que l'évacuation latérale du fumier est assurée par des échancrures latérales 34a, 36a, 34b, 36b du cadre 12 du dispositif d'épandage 10 qui coopèrent avec les vis d'épandage 18a, 18b respectives.

La figure 5 montre l'augmentation de la largeur d'épandage obtenue grâce à la coopération des doigts 24 de projection pliés et des échancrures 34, 36. L₁ est typiquement la largeur d'épandage d'un épandeur à vis horizontales classique, et L₂ est la largeur d'épandage obtenue grâce à l'invention.

Les doigts 24 de projection pliés disposés sur toute la longueur de la vis 18 selon le mode de réalisation de la figure 1 permettent également d'obtenir ce résultat.

Grâce à l'agencement de la figure 5 selon lequel une partie centrale B de la vis 18 ne comporte que des doigts plats et les deux parties d'extrêmes A et C de la vis 18 ne comportent que des doigts pliés, on peut, en jouant sur la largeur relative des zones A, B et C contrôler le débit de fumier dans chacune des zones précitées et ainsi, par exemple, assurer l'uniformité de l'épandage sur toute la largeur de la zone d'épandage.

On peut aussi contrôler le débit de fumier dans toute la zone d'épandage de façon plus fine en utilisant une répartition des doigts 24 de projection dont les angles α sont progressivement croissants le long de chacune desdites demi-vis (20, 22) de son extrémité intérieure vers son extrémité extérieure.

Typiquement, quel que soit le mode de réalisation, les angles sont toujours inférieurs ou égaux à 30°.

Dans certains modes de réalisation, l'angle α est le même pour tous les doigts de projection pliés et vaut de préférence environ 20°.

L'invention assure donc une bonne largeur d'épandage pour les épandeurs à vis horizontales. De plus, le surcoût par rapport à un épandeur à vis horizontale classique est peu important. En outre, l'invention peut être mise en oeuvre sur un épandeur à vis horizontales classique par simple remplacement des doigts de projection.

## Revendications

1. Vis d'épandage (18) pour épandeur de fumier ou analogue à vis horizontales, comprenant deux demi-vis coaxiales (20, 22) à pas inversés, des doigts de projection (24) répartis sur chacune desdites demi-vis (20, 22), chacun desdits doigts (24) de projection présentant une partie (25) en saillie par rapport au bord de la demi-vis (20, 22) correspondante, **caractérisée en ce que** lesdites parties en saillie (25) des doigts de projection (24) comportent, au moins dans les régions d'extrémité de la vis (18), des bords arrières (30) pliés vers les extrémités extérieures respectives des demi-vis (20, 22) correspondantes, chaque bord arrière (30) étant plié, par rapport au bord de la demi-vis correspondante, dans le sens d'entrainement en rotation de la vis.

2. Vis d'épandage suivant la revendication 1, **caractérisée en ce que**, les doigts de projection (24) étant en forme générale de plaques planes, les bords arrières pliés (30) des doigts de projection de chacune des demi-vis (20, 22) font avec les plans des plaques correspondantes des angles (α) progressivement croissants le long de chacune desdites demi-vis (20, 22), de son extrémité intérieure vers son extrémité extérieure.

3. Vis d'épandage suivant la revendication 1, **caractérisée en ce qu'**une partie centrale (B) de la vis présente des doigts de projection (24) plats, et **en ce que** dans les deux parties d'extrémité restantes (A, C), la vis (18) présente des doigts (24) de projection munis de bords arrières pliés (20).

4. Vis d'épandage (18) suivant l'une quelconque des revendications 1 à 3, **caractérisé en ce que** l'angle (α) que fait le bord arrière plié (30) de chaque doigt de projection (24) avec le plan de la plaque formant ledit doigt de projection (24) est inférieur ou égal à 30°.

5. Vis d'épandage (18) suivant l'une quelconque des revendications 1 et 3, **caractérisée en ce que** l'angle (α) que fait le bord plié (30) de chaque doigt de projection (24) avec le plan de la plaque formant ledit doigt de projection (24) est environ égal à 20°.

6. Vis d'épandage suivant l'une quelconque des revendications 1 à 5, **caractérisée en ce que** chaque doigt de projection (24) comporte un bord d'attaque (32) incliné dans le sens opposé au sens d'entraînement de la vis (18).

7. Vis d'épandage suivant l'une des revendications 1 à 6, **caractérisée en ce que** les bords arrières pliés (30) des doigts d'épandage sont de forme triangulaire.

8. Epandeur de fumier ou analogue comprenant un châssis (2) muni d'au moins un train de roues (4) et portant une caisse (6) de réception du produit (9) à épandre munie d'un fond mouvant (8) à une extrémité duquel est placé un dispositif d'épandage (10) comprenant au moins une vis horizontale montée sur les deux côtés d'un cadre (12) dudit dispositif d'épandage (10), **caractérisé en ce que** la vis d'épandage est une vis (18) suivant l'une quelconque des revendications 1 à 7, et **en ce que**, des échancrures (34, 36) coopérant avec ladite vis (18) pour assurer l'éjection latérale du fumier (9) sont ménagées dans chacune des parois latérales du cadre (12) du dispositif d'épandage (10).

9. Epandeur suivant la revendication 8, **caractérisé en ce que** ladite vis d'épandage (18) est surmontée d'une vis d'amenée (14) du fumier recouverte d'un capotage (16) d'orientation du produit vers ladite vis d'épandage (18).

10. Epandeur selon la revendication 8, **caractérisé en ce qu'**il comporte deux vis (18a, 18b) disposées l'une au-dessus de l'autre et **en ce qu'**elles coopèrent chacune avec deux échancrures d'éjection (34a, 36a, 34b, 36b) ménagées dans les parois latérales du cadre (12) du dispositif d'épandage (10) au niveau des extrémités de chacune des vis (18a, 18b).

## Claims

1. Spreading screw (18), for spreading manure or the like, with horizontal screws, comprising two coaxial half-screws (20, 22) with opposed threads and ejection fingers (24) distributed over each of the said half-screws (20, 22), each of the said ejection fingers (24) having a portion (25) which projects relative to the edge of the corresponding half-screw (20, 22), **characterized in that** the said projecting portions (25) of the ejection fingers (24) comprise, at least in the end regions of the screw (18), rear edges (30) which are bent towards the respective outer ends of the corresponding half-screws (20, 22), each rear edge (30) being bent, relative to the edge of the corresponding half-screw, in the direction in which the screw is driven in rotation.

2. Spreading screw according to Claim 1, **characterized in that**, the ejection fingers (24) being in the general form of flat plates, the bent rear edges (30) of the ejection fingers of each of the half-screws (20, 22) are inclined to the planes of the corresponding plates at angles (α) which increase progressively along each of the said half-screws (20, 22), from its inner end towards its outer end.

3. Spreading screw according to Claim 1, **characterized in that** a central portion (B) of the screw has flat ejection fingers (24), and **in that**, in the two remaining end portions (A, C), the screw (18) has ejection fingers (24) provided with rear bent edges (20).

4. Spreading screw (18) according to any one of Claims 1 to 3, **characterized in that** the angle (α) at which the rear bent edge (30) of each ejection finger (24) is inclined to the plane of the plate forming the said ejection finger (24) is less than or equal to 30°.

5. Spreading screw (18) according to any one of Claims 1 and 3, **characterized in that** the angle (α) at which the bent edge (30) of each ejection finger (24) is inclined to the plane of the plate forming the said ejection finger (24) is approximately equal to 20°.

6. Spreading screw according to any one of Claims 1 to 5, **characterized in that** each ejection finger (24) comprises a leading edge (32) which is inclined in the opposite direction to the direction in which the screw (18) is driven.

7. Spreading screw according to any one of Claims 1 to 6, **characterized in that** the bent rear edges (30) of the spreading fingers are triangular.

8. Spreader of manure or the like, comprising a chassis (2) provided with at least one wheel and axle set (4) and carrying a body (6) for holding the product (9) to be spread, the body (6) being provided with a moving base (8) at one end of which is disposed a spreading device (10) comprising at least one horizontal screw mounted on the two sides of a frame (12) of the said spreading device (10), **characterized in that** the spreading screw is a screw (18) according to any one of Claims 1 to 7, and **in that** cut-outs (34, 36), cooperating with the said screw (18) in order to ensure lateral ejection of the manure (9), are arranged in each of the side walls of the frame (12) of the spreading device (10).

9. Spreader according to Claim 8, **characterized in that** a manure-feed screw (14) is mounted above the said spreading screw (18) and is covered by a cowling (16) for directing the product towards the said spreading screw (18).

10. Spreader according to Claim 8, **characterized in that** it comprises two screws (18a, 18b) arranged one above the other, and **in that** each of the screws (18a, 18b) cooperates with two ejection cut-outs (34a, 36a, 34b, 36b) arranged in the side walls of the frame (12) of the spreading device (10) at the level of the ends of each of the screws (18a, 18b).

## Patentansprüche

1. Streuwalze (18) für einen Dungstreuer oder dergleichen mit waagerechter Walze, mit zwei koaxialen Halbschrauben (20, 22) mit entgegengesetzter Steigung, Auswerferfingern (24), die auf jeder der genannten Halbschrauben (20, 22) verteilt sind, wobei jeder der Auswerferfinger (24) einen Teil (25) aufweist, der Bezug auf den Rand der betreffenden Halbschraube (20, 22) vorspringt, **dadurch gekennzeichnet, daß** die vorspringenden Teile (25) der Auswerferfinger (24) wenigstens in den Endbereichen der Walze (18) hintere Ränder (30) haben, die zu den jeweiligen äußeren Enden der betreffenden Halbschraube (20, 22) abgewinkelt sind, wobei jeder hintere Rand (30) in Bezug auf den Rand der betreffenden Halbschraube in der Drehantriebsrichtung der Walze abgewinkelt ist.

2. Streuwalze nach Anspruch 1, **dadurch gekennzeichnet, daß** die Auswerferfinger (24) die allgemeine Form von flachen Platten haben und daß die abgewinkelten hinteren Ränder (30) der Auswerferfinger jeder der Halbschrauben (20, 22) mit den Ebenen der entsprechenden Platten Winkel (α) bilden, die längs jeder der genannten Halbschrauben (20, 22) vom inneren Ende zum äußeren Ende hin progressiv zunehmen.

3. Streuwalze nach Anspruch 1, **dadurch gekennzeichnet, daß** ein zentraler Bereich (B) der Walze flache Auswerferfinger (24) aufweist und daß die beiden verbleibenden Endbereiche (A, C) der Walze (18) Auswerferfinger (24) mit abgewinkelten hinteren Rändern (20) haben.

4. Streuwalze nach einem der Ansprüche 1 bis 3, **dadurch gekennzeichnet, daß** der Winkel (α), den der abgewinkelte hintere Rand (30) jedes Auswerferfingers (24) mit der Ebene der diesen Finger bildenden Platte bildet, kleiner oder gleich 30° ist.

5. Streuwalze (18) nach einem der Ansprüche 1 bis 3, **dadurch gekennzeichnet, daß** der Winkel (α), den der abgewinkelte Rand (30) jedes der Auswerferfinger (24) mit der Ebene der diesen Finger bildenden Platte bildet, etwa gleich 20° ist.

6. Streuwalze nach einem der Ansprüche 1 bis 5, **dadurch gekennzeichnet, daß** jeder Auswerferfinger (24) einen vorderen Rand (32) hat, der in der Richtung entgegengesetzt zur Antriebsrichtung der Walze (18) geneigt ist.

7. Streuwalze nach einem der Ansprüche 1 bis 6, **dadurch gekennzeichnet, daß** die abgewinkelten hinteren Ränder (30) der Streufinger dreieckig sind.

8. Dungstreuer oder dergleichen mit einem Gestell (2), das wenigstens einen Satz von Rädern (4) aufweist und einen Kasten (6) zur Aufnahme des auszustreuenden Produkts (9) trägt, mit einem beweglichen Boden (8), an dessen einem Ende eine Streuvorrichtung (10) angeordnet ist, die wenigstens eine waagerecht an den beiden Seiten eines Rahmens (12) der Streuvorrichtung (10) montierte Walze aufweist, **dadurch gekennzeichnet, daß** die Streuwalze eine Walze (18) nach einem der Ansprüche 1 bis 7 ist und daß Ausschnitte (34, 36), die mit der genannten Walze (18) zusammenwirken, um das seitliche Auswerfen des Dungs (9) sicherzustellen, in jeder der Seitenwände des Rahmens (12) der Streuvorrichtung (10) ausgebildet sind.

9. Dungstreuer nach Anspruch 8, **dadurch gekennzeichnet, daß** über der Streuwalze (18) eine Zufuhrwalze (14) für Dung angeordnet ist, die von einer Verkleidung (16) zum Lenken des Produkts auf die genannten Streuwalze (18) bedeckt ist.

10. Dungstreuer nach Anspruch 8, **dadurch gekennzeichnet, daß** er zwei übereinander angeordnete Walzen (18a, 18b) aufweist und daß jede von ihnen mit zwei Auswurf-Ausschnitten (34a, 36a, 34b, 36b) zusammenwirkt, die in Höhe der Enden jeder der Walzen (18a, 18b) in den Seitenwänden des Rahmens (12) der Streuvorrichtung (10) ausgebildet sind.
